# EUROPEAN PATENT SPECIFICATION

(11) **EP 1 289 360 B1**
(45) Date of publication and mention of the grant of the patent: **13.07.2005**
(21) Application number: 00960241.8
(22) Date of filing: 19.09.2000
(51) Int. Cl.: A01K 39/06

(54) **SWIMMING POULTRY CRAMMING METHOD AND AUTOMATIC CRAMMING SYSTEM**
VERFAHREN UND VORRICHTUNG ZUM AUTOMATISCHEN STOPFEN BEI DER GEFLÜGELMAST
PROCEDE DE GAVAGE DE VOLAILLES AQUATIQUES ET SYSTEME DE GAVAGE AUTOMATIQUE

(30) Priority: 14.06.2000 BG 10453100
(43) Date of publication of application: 12.03.2003
(73) Proprietor: Elpine Trade International Ltd., 1421 Sofia (BG)
(72) Inventor: NIKOLOV, Mario Alexiev, 1421 Sofia (BG); NIKOLOV, Petar Alexiev, 1421 Sofia (BG)
(74) Representative: Chitakova, Ekaterina Tzvetanova
(86) International application number: PCT/BG2000/000023
(87) International publication number: WO 2001/095706

(56) References cited:
- FR-A- 1 507 228
- FR-A- 2 602 644
- FR-A- 2 695 004
- FR-A- 2 706 857
- FR-A- 2 713 442

## Description

### FFIELLD OF THE INVENTION

This invention relates to a swimming poultry cramming method and an automatic cramming system which will be applied as a highly efficient technology for production of ecologically clean geese or duck meat and liver of high quality in great quantities, of low cost, low fat content and liver cells improved texture.

### PRIOR ART

A method is known for dosing quantities of a mix consisting mainly of water and flour where the dose and the rate of mash mix feeding is accurately controlled. It is used for swimming poultry cramming.

The disadvantage of this method is that an increase of the liver is obtained by a mechanical control of the dose and the feeding rate of the mash, representing a mix of water and flour, to be stuffed in poultry throat by developing the elasticity of neck tissues with a view to gradually increasing the quantity of food which often causes an over ―stretch of neck tissues as a result of stuffing a larger quantity or food than allowed and a more rapid rate of stuffing. /FR 9307834/

A method is known for growing swimming poultry such as duck or geese in groups in continuous three, four or six cycles for every new lot being supplied, and the necessary quantities of water and food are regulated only once for each lot taking into consideration poultry features for each cycle. / BG 50031/

The disadvantage of this method is that the increase in poultry growth and liver quantity and quality is achieved as a result of the effect on external factors such as poultry soothing and optimum use of floor surface in the premises, the poultry being fed and watered according to a programme prepared in advance without a change of food and water quantities required for each group being necessary.

A machine is known for dosing a mash consisting of a frame with undercarriage, a drive, a mash storage bin equipped with a mechanism for forcing the mash into a proportioning device equipped with a hydraulic control system. It is situated under the bin and consists of a cylindrical chamber with a built-in horizontal sliding piston, a shutter-proportioned, a feeding aperture and an aperture for mash emptying through a metal nozzle. /FR 9307834/

The disadvantage of this system is the impossibility of accurate mash dosing because it is impossible to maintain a constant mash density and because of the constantly increasing gap in the proportioning device.

### SUMMARY OF THE INVENTION

The purpose of this method is to establish a swimming poultry cramming method and an automatic cramming system using it allowing to influence fat accumulation in poultry liver and to increase the quantity of peripheral fatty tissue accumulated by modifying repeatedly the cramming programme and controlling mash composition and accurate dosage.

The essence of this invention is the use of a method by which poultry are grown in a continuous cyclic regime, the feeding regime required being repeatedly changed, and ducks or geese of 60 days or more are put to a preliminary feeding regime, when the whole daily ration of food is given once within 1-2 hours in case there feeding quantities large enough to ensure at least 9-15 cm feeding surface per bird in case of using circular feeding-troughs or 12-20 cm in case of using straight feeding-troughs. After reaching an age of 75 days the birds are transferred in premises equipped with cages for cramming arranged at 50 cm from the floor along the length of the buildings and containing each 3-4 geese or 5-6 ducks. A cramming programme is worked out depending on poultry kind and sex and on bird's age and weight in the lot. Cramming mash composition and doses are introduced in the automatic cramming system. After the birds are put in the cages for cramming, they are put to a special individual feeding regime by using the automatic system for 12-15 days. The crammer takes bird's head, opens the bill with one hand and inserts with the other hand the detachable metal nozzle of the automatic cramming system into bird's throat, the neck is stretched all the time and the bird stands fixed by means of a special device on cage bottom in front of the cage. When the nozzle reaches the lowest part of the throat, the control button on the detachable nozzle of the automatic system should be pressed and the relevant pre-set dose for the day is stuffed into the throat. The cages represent a metal structure 85 cm wide and 85 cm long.

According to the cramming programe the mash contains 33-42% by weight maize grains, 58-68% by weight maize flour, 0-4% starch, 2% by weight vitamin premix and 64% by weight water with respect to the dry substance while maintaining a constant ratio of 26% by weight maize, 35% by weight flour and 39%by weight water with respect to the total mass.

The daily rations in the cramming programme are of the order of 328-787 g of mash for ducks and 320-877 g of mash for geese.

The essence of this invention is also the design of an automatic cramming system for swimming poultry consisting of a frame with undercarriage, a drive, a mash storage bin equipped with a safety cover and a mechanism forcing the mash into a proportioning device equipped with a hydraulic control system located under the bin and consisting of a hydraulic chamber with a built-in horizontal sliding piston, the cylindrical chamber being provided with a shutter-proportioner, a feeding aperture and a mash evacuating aperture by means of a metal nozzle. The mechanism for forcing the mash represents a bipartite reversible screw mixer set on bearings in the cover and a support in the lower cylindrical part of the bin provided with an independent hydromotor to operate it. The metal nozzle for emptying the mash from the proportioning device represents detachable part and has buttons for control of the feeding. It is connected with the aperture for emptying the proportioning device by means of the pipe for feeding. The hydraulic system, the screw mixer, the proportioning device, the shutter-proportioner and the control buttons of the detachable metal nozzle are controlled simultaneously by a microprocessor by means of a control panel.

The advantages of this invention are that the automatic swimming poultry cramming system allows:
- an accurate dosage of the quantity and the nutritive value of the mash for cramming by maintaining mash constant density at any moment, the result being that the weight and nutritive value of the doses fed by the proportioning device are very accurately set;
- to reduce maize consumption per one kilo of liver,
- to adopt a differentiated approach to the kind of poultry reared by ensuring a possibility to choose the detachable metal nozzle for mash emptying from the proportioning device into the bird's throat depending on the kind of birds thus reducing the number of cases of injuring throat tissues during cramming and increasing the growth consequently ;
- to reduce labour 3-4 times by increasing crammer's efficiency per unit of time in comparison with the traditional cramming technology thus increasing the number of crammed poultry for the same period of time in the same conditions.

The swimming poultry cramming method allows:
- to rear poultry of equal size with elastic and well-developed crops by using a preliminary feeding regime from 60 to 75 days of age;
- to increase liver weight by controlling food composition and especially the ratio "maize grain/flour" in the mash resulting in an accumulation predominantly of fatty tissue in the liver due to digestion improvement by a greater overtaxing of bird's gizzard;
- to obtain liver of less granular texture and better technological qualities as a result of the greater quantity of fatty tissue accumulated in it.

### THE DRAWINGS

An example of design of the automatic swimming poultry cramming system explaining the essence of this invention is shown in the figures enclosed of which:

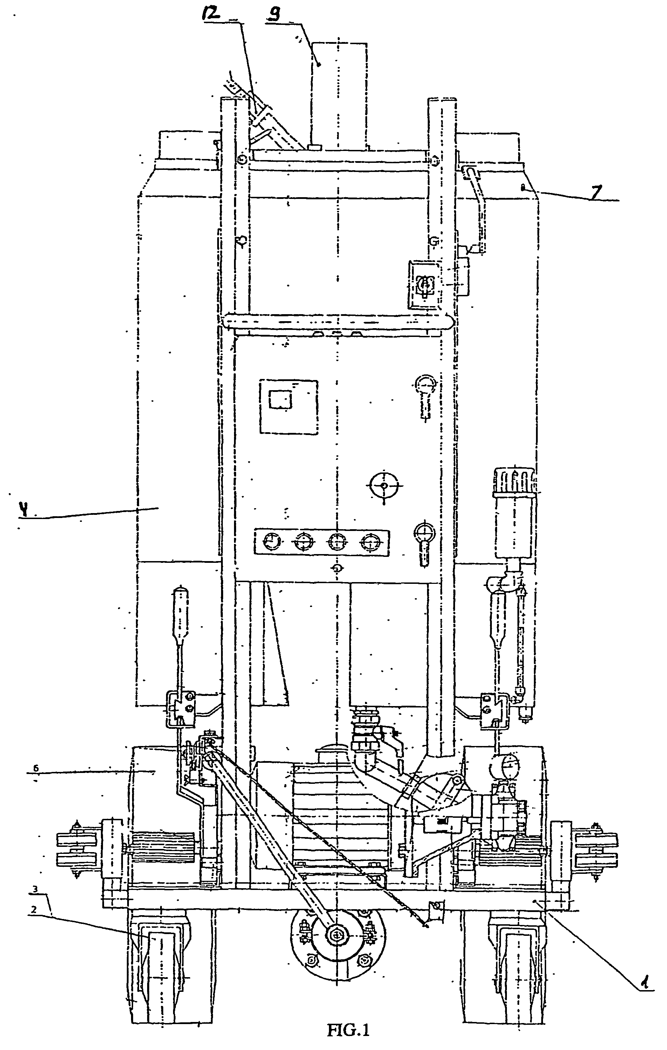

Fig. 1 - Axonometric view of the automatic system;

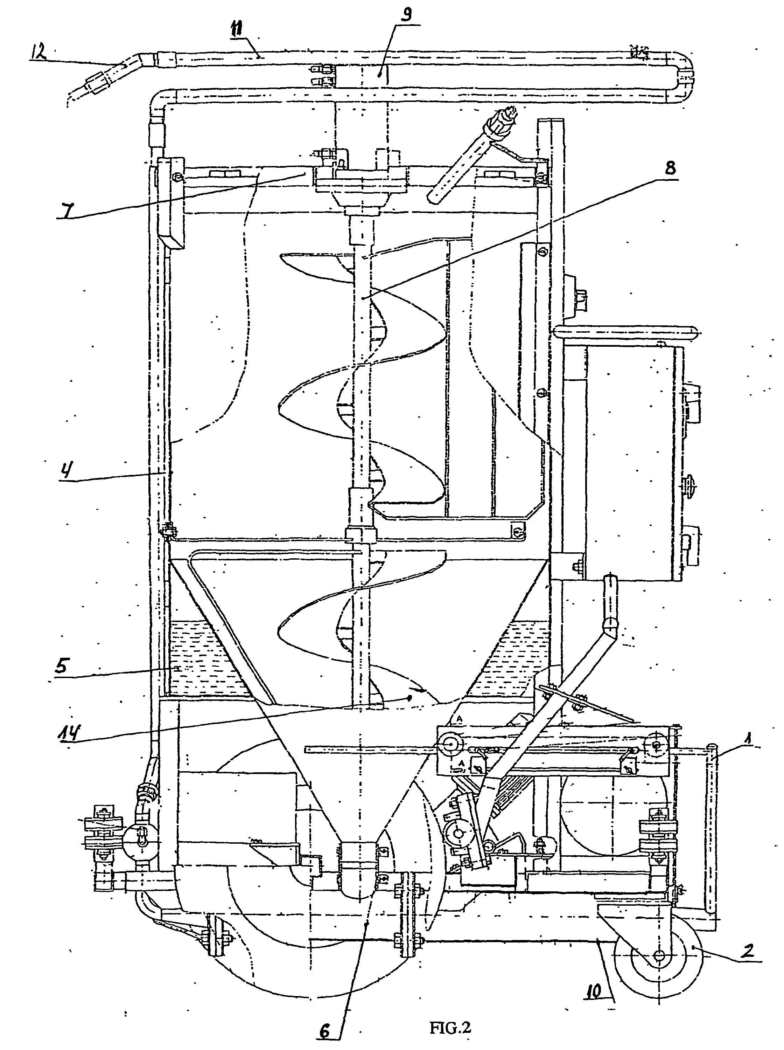

Fig. 2 - Semi-view /semi -cross - section of the automatic system;

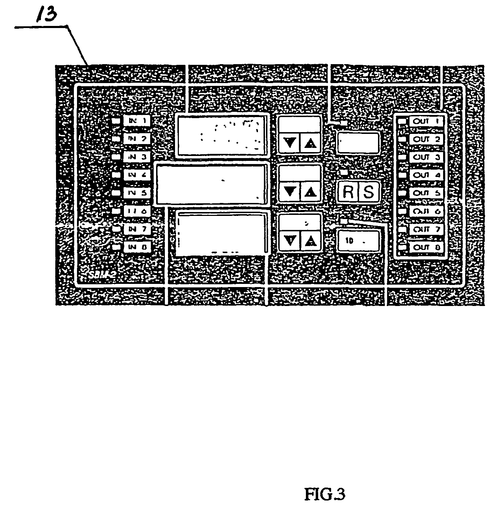

Fig. 3 - View of the control panel of the electronic system for control of the automatic system.

### DETAILED DESCRIPTION

An automatic swimming poultry cramming system consisting of a frame with undercarriage 1 made from anticorrosive closed steel sections equipped with four running wheels 2 and 3 of which two driving ones and two driven ones. A cylindrical bin 4 with tapered bottom for delivering the mash to the proportioning device 6 made from anticorrosive alloy steel sheets of high quality and used for storage of the mash 5 is immovably fixed on the frame 1. The bin 4 for storage of the mash 5 is equipped with a safety cover 7, a bipartite reversible screw mixer 8 set on bearings in the cover 7 and a support in the bin lower cylindrical part and provided with an independent driving hydromotor 9. The safety cover 7 represents a grid consisting of an immobile central part (not shown in the figures) the driving hydromotor 9 of the screw mixer 8 being mounted immovably on it and of mobile side covers (not shown in the figures) for pouring the components of the mash 5 into the bin 4.

The proportioning device 6 located under the bin 4 consists of a cylindrical chamber 10 with a built-in two-way hydraulic cylinder (not shown in the figures) provided with a horizontal sliding piston (not shown in the figures) the cylindrical chamber 10 being provided with a shutter-proportioner (not shown in the figures), a feeding aperture (not shown in the figures) and a mash emptying aperture (not shown in the figures) connected by means of a feeding pipe 11 with a detachable metal nozzle 12 having buttons for control of the feeding. The screw mixer 8, the proportioning device 6, the shutter-proportioner, then driving hydromotor 9, the hydraulic system (not shown in the figures) consisting of a hydraulic tank located in bin 4 lower part, a motor pump, a control hydraulic unit, a filter, a pressure gauge, a hydromotor, a two-way hydraulic cylinder controlling the proportioning device 6, a hydraulic cylinder controlling the shutter-proportioner , a HP hydraulic piping and the buttons for control of the feeding on the detachable metal nozzle 12 are all controlled together by a microprocessor (not shown in the figures) by means of the electronic control panel 13.

### USE OF THE INVENTION

The swimming poultry cramming method relates to a compete technological cycle to be carried out on one or many sites for rearing geese of ducks in a cyclic flow regime and the quantities of food required vary continuously. The ducks or geese of 60 days or more are put to a preliminary feeding regime, when the whole daily ration is given within 1-2 hours in case great quantities of food are available and at least a 9-15 cm feeding surface per bird is ensured when using circular feeding-troughs and 12-20 cm when using straight feeding-troughs with a view to growing birds of well-developed and elastic crops and equal weight and size which is extremely important for the good start of the actual cramming and achieving the optimum final result, as well as a condition of shortening the period of time for production of fattened liver.

After 75 days the birds are put in cages for cramming in special premises and a cramming programme is worked out depending on bird's kind and sex, as well as age and weight of the lot, and containing mash composition and doses for cramming. Then this programme is introduced in the automatic system.

Spacious premises with high ceilings and large internal volumes are used. They are to be equipped with a cooling and ventilation system for forced air circulation and cooling, the coolers being located at one end of the premise which should be tightly closed so that air can penetrate through the coolers only. The ventilation system distributes the cooled air all over premises and evacuates the waste polluted air out of the same. The cages represent a 85 cm wide and 85 cm long metal structure situated at 50 cm from the floor and arranged in rows along premises length, each cage housing 3-4 geese or 5-6 ducks.

On the 75^{th} day the birds are put into cages for cramming by noon at the latest and left to calm down by the evening giving them only water during that time. The first stuffing being in the same evening or in the next morning at the latest and continues for 12-15 days, when the poultry live every day under a special individual feeding regime by using the automatic swimming poultry cramming system and the pre-set cramming programme selected.

The individual feeding regime using the automatic swimming poultry cramming system is carried out, as follows: the crammer takes bird's head calmly without jerks, opens its bill with one hand and inserts smoothly and carefully in bird's throat the metal nozzle 12 with the other hand, the bird's neck being stretched all the time and the bird standing fixed by means of a special device on the bottom in front of the cage. When the nozzle 12 reaches the lowest part of neck, the feeding control button on the detachable nozzle 12 should be pressed, and the ration pre-set for the day begins to be fed into bird's throat. The daily rations pre-set in the cramming programme are different for the different days and they are of the order of 328-787 g of mash for ducks and 320-877 g of mash for geese. The ration are defined depending on bird's sex and pre-set in the programme of the automatic swimming poultry cramming system by means of its proportioning device 6.

The procedure is repeated with all birds in a cage, then the crammer goes on with the next cage and so on. The operation of the automatic swimming poultry cramming system is an automatic one and the system is capable of following crammer's movements, but if it is necessary, it will be also possible to switch on the manual control. After feeding is over, the crammer should carry out a control of the process of assimilation of the food given during the previous stuffing period observing all the time the digestion of the birds during the day. The early digestion of all the food by some birds is an indication of a problem which should be studied and analyzed.

The birds take the mash 5 which represents a mix of 33-42% by weight maize grains, 58-68% by weight maize flour, 0-4% starch, 2% by weight vitamin premix and 64% by weight water with respect to the dry substance maintaining at the same time a constant ratio of 26% by weight maize, 35% by weight flour and 39% by weight water with respect to the total mass. The premix is complex product containing vitamins, reinforcing additives to improve digestion, starch, conservatives, minerals and micro-elements. Additives to maize grains and flour represent a kind of a regulator of the physiological condition ensuring a better assimilation of the food and a mechanical catalyser of mash density. The increase of maize grains percentage in the mash causes a greater overtaxing of bird's gizzard, since digestion of mash containing only flour is very rapid, and practically the gizzard does not function. Maize grains make the gizzard function thus regulating the digestion. Maize grains in the mash allow to control the quantity of maize in bird's crop.

The mash 5 is prepared in the bin 4 for mash storage in the automatic swimming poultry cramming system. First, water is measured, then vitamin premix and starch are dissolved therein, maize flour and maize grains are added gradually at the end. The mixing is carried out by continuously stirring the mix by means of the screw mixer 8. When the screw mixer 8 rotates in one direction, the screw 14 raises up the mix, then the screw mixer 8 starts rotating in the opposite direction and this is repeated until obtaining a homogeneous mix of an accurately determined density as pre-set and controlled by the pressure gauge of the automatic cramming system.

The efficient final result of the cramming depends on the accurate determination and assimilation of the daily mash ration by maintaining its nutritive value which is achieved with the design and operation of the automatic swimming poultry cramming system, the electronic control of the processes of mash mixing, the initial fixing of every bird at any moment of its stuffing, the calibration of the system in a regime of feeding ten doses, the recirculating regime, the regime of feeding one dose, the motion of the system to and for at low and high speeds and the motion of the system by one step (forwards and backwards) at a time pre-set by the crammer.

Dose pre-setting and control measurements are carried out every day by the crammer before starting work. A regime of recirculation is pre-set first, when the mash 5 mixed to a determined density is delivered through the open shutter-proportioner and the feeding aperture to the cylindrical chamber of the proportioning device 6 and when the piston of the proportioning device 6 starts moving between two end points with a view to better homogenizing the mix. When delivering the mash 5, the shutter-proportioner is open, and when the piston moves back in order to fill anew the cylindrical chamber of the proportioning device 6, the shutter-proportioner is closed, thus the recirculating regime is over. At the same time the screw mixer 8 starts operating, the mix is stirred again in both directions of motion, and after stirring stops, the regime of ten dose for system calibration starts, during which the proportioning device 6 delivers consecutively ten doses as pre-set in the electronic control system, then the system is automatically set up and starts operating in one-dose feeding regime. Thus the presetting of the system is over, and it is ready for a continuous operation during the day in one-dose feeding regime.

In the one-dose feeding regime the piston of the proportioning device 6 is in its initial position. When a signal of feeding start is given by means of the buttons for feeding control, the shutter-proportioner is opened, then the piston of the proportioning device 6 makes a stroke as pre-set by the crammer by means of the electronic control system and forces the pre-set grams of mash 5 which passes from the proportioning device 6 through the feeding pipe 11 and the detachable metal nozzle 12 into bird's throat. When the piston moves in the direction of forcing the dose, the shutter-proportioner is open to let the dose pass and when the pistons returns back for a new dose, the shutter-proportioner is closed. After a dose is forced, the piston returns to its end position. At that time a new dose enters the proportioning device 6 from the bin 4. After the piston reaches its end position, it starts moving in the opposite direction, closes the feeding aperture and reaches its initial position ready for delivering a new dose, when the crammer gives a signal by pressing the feeding control buttons. When the piston reverts to its initial position, the automatic swimming poultry cramming system moves at the same time by one step forwards or backwards at a moment as pre-set by the crammer by means of the electronic control panel 13.

## Claims

1. Swimming poultry cramming method for rearing geese or ducks where the feeding of the growing poultry is carried out in a cyclic flow regime and necessary quantities of water and food are regulated only once for every lot of birds according to the particular features of the birds in every cycle, **characterized by** that, the food quantities required are repeatedly changed, the 60-day or more old ducks or geese being put to a feeding regime during which the whole daily ration of food is given during 1-2 hours in case large quantities of food are available by ensuring at least 9-15 cm feeding surface per bird, when using circular feeding-troughs, or 12-20 cm feeding surface per bird, when using straight feeding-troughs, and after birds reach 75 days of age, they are placed in premises equipped with cages for cramming situated at a height of 50 cm from the floor, arranged in rows along premises length and containing each 3-4 geese or 5-6 ducks, a feeding programme for cramming being determined depending on bird's kind and sex, as well as the age and weight of the lot as pre-set in the automatic cramming system and containing cramming mash composition and doses, then after placing the birds in the cages for cramming, they are put to a special individual feeding regime carried out by the automatic system, the crammer taking bird's head, opening the bill with one hand and inserting with the other hand the detachable metal nozzle (12) of the automatic cramming system into bird's throat, its neck being stretched all the time and the bird standing fixed by means of a special device at the bottom of cage front part, and when the nozzle (12) reaches the lowest part of the throat, the control button on the detachable nozzle (12) of the automatic system is pressed and the relevant dose for the day as pre-set in the programme is being stuffed in the throat.

2. Swimming poultry cramming method according to Claim 1, **characterized by** that the cages for cramming represent a metal structure 85 cm wide and 85 cm long.

3. Swimming poultry cramming method according to Claim 1, **characterized by** that the cramming mash (5) as per the cramming programme contains 33-42% by weight maize grains, 58-68% by weight maize flour, 0-4% starch, 2% by weight vitamin premix and 64% by weight water with respect to the dry substance, maintaining a constant ratio of 26% by weight maize, 35% by weight flour and 39% by weight water with respect to the dry mass.

4. Swimming poultry cramming method according to Claim 1, **characterized by** that the daily ration of the cramming programme are of the order of 328-787 g of mash for ducks and 320-877 g of mash for geese.

5. An automatic swimming poultry cramming system consisting of a frame with undercarriage, drive, mash storage bin equipped with a mechanism forcing the mash into a proportioning device provided with a hydraulic control system, located under the bin and consisting of a cylindrical chamber with a built-in horizontal sliding piston, a shutter-proportioner, a feeding aperture and an aperture for mash emptying by means of a metal nozzle **characterized by** that the bin (4) is equipped with a safety cover (7) and the mechanism for mash forcing represents a bipartite reversible screw mixer (8) lying on bearing in the cover (7) and a support in the lower cylindrical part of the bin (4) equipped with an independent driving hydromotor (9), the metal nozzle (12) for mush emptying from the proportioning device (6) being detachable, provided with feeding control buttons and connected with the aperture for proportioning device (6) emptying by means of a pipe (11) and the hydraulic system, the screw mixer (8), the proportioning device (6), the shutter-proportioner and the feeding control buttons of the detachable metal nozzle (12) being all controlled simultaneously by a microprocessor controller by means of a control panel (13).

## Patentansprüche

1. Verfahren zum automatischen Stopfen bei der Geflügelmast von Wasserschwimmenden, das Züchten von Gänsen und Enten einschließt, bei dem sich das Züchten von heranwachsenden Geflügeln in einem zyklischen Bandregime vollzieht und die notwendige Tränk - und Fütterungsfront bei jeder neuen Aufstellung mit Geflügeln reguliert wird, gemäß den Besonderheiten der Geflügel, **gekennzeichnet dadurch, daß** die notwendige Fütterungsfront mehrfach verändert wird, wobei Enten oder Gänse 60 oder uber 60 Tage alt einem vorläufigen Fütterungsregime unterzogen werden, bei dem die ganze Tagesration von Futter einmal gegeben wird während 1-2 Stunden beim Vorhandensein einer genug großen Fütterungsfront durch Besorgung einer mindestens 9 bis 15 cm langen Fütterungsflache für einen Vogel bei Nutzung von linearen Fütterkästen oder nachdem die Geflügel 75 Tage alt werden, stellt man sie in Räumen mit Zellen zum Stopfen ausgerustet, 50 cm hoch vom Boden, gereiht nach der Länge der Gebäude mit 3-4 Gänsen oder 5-6 Enten dann und es wird ein Futterungsprogramm zum Stopfen bestimmt, abhängig von der Art und dem Geschlecht der Geflügel und dem Alter und dem Gewicht des Postens, das in einem automatisierten System als Inhalt des Breis zum Stopfen und Dosis eingegeben wird, wobei nach der Aufstellung der Geflügel in den Käfigen zum Stopfen die Geflügel täglich 12 bis 15 Tage lang einem speziellen individuellen Fütterungsprogramm mit dem automatisierten System unterzogen werden, indem der Arbeiter den Geflügelkopf fängt und den Schnabel mit der einen Hand öffnet und mit der anderen ein ersetzbares Metallendstück (12) des automatisierten Fütterungssystems in den Kropf des Vogels setzt, wobei der Kropf die ganze Zeit gereckt ist und der Vogel auf dem Boden getreten ist, fixiert durch eine spezielle Vorrichtung im Vorderteil des Käfigs, indem man beim Erreichen des Endstücks (12) im ganz unteren Teil des Kropfes den Druckknopf auf einem ersetzbaren Endstück (12) des automatisierten Systems drückt und in den Kropf die entsprechende vorläufig durch das Programmm eingegebene Futterungsdosis für den Tag reicht.

2. Verfahren zum Stopfen bei der Geflügelmast von Wasserschwimmenden laut Anspruch 1, **gekennzeichnet dadurch, daß** die Zellen zum Stopfen Käfige mit Metallkonstruktion mit Breite 85 cm und Länge 85 cm sind.

3. Verfahren zum Stopfen bei der Geflügelmast von Wasserschwimmenden laut Anspruch 1, **gekennzeichnet dadurch, daß** im Fütterungsprogramm zum Stopfen der Brei (5) die folgende Zusammensetzung als Gewicht in Prozenten hat: Kornmais 33 bis 42, Maismehl von 58 bis 68, Stärke von 0 bis 4, Vitaminmischung 2 und Wasser 64 gegenüber der trockenen Masse, indem ein ständiges Verhältnis von 26 % Gewicht Mais, 35 % Gewicht Mehl und 39 % Gewicht Wasser gegenüber der Gesamtmasse aufgehoben wird.

4. Verfahren zum Stopfen bei der Geflügelmast von Wasserschwimmenden laut Anspruch 1, **gekennzeichnet dadurch, daß** im Fütterungsprogramm zum Stopfen die Tagesdosen von 328 bis 787 g Brei zum Stopfen der Enten und von 320 bis 877 g Brei zum Stopfen der Gänse sind.

5. Automatisiertes System zum Stopfen bei der Geflügelmast von Wasserschwimmenden, bestehend aus Gestell, Antrieb, Trichter zum Aufbewahren des Breis, ausgerüstet mit Mechanismus zum Fortschieben der Mischung in ein Dosierwerk, ausgerüstet mit einem hydraulischen Steuersystem, situiert unter dem Trichter, bestehend aus zylindrischer Kamera darin mit einem eingebauten gleitenden horizontalen Kolben, wobei die zylindrische Kamera mit einem schließenden Mechanismus ausgerüstet ist - Verteiler, Öffnung zum Füllen und Öffnung zum Entleeren des Breis durch ein Metallendstück, **gekennzeichnet dadurch, daß** der Trichter (4) einen Schutzdeckel (7) hat und das Mechanismus zum Schieben der Mischung ein zweiteiliger reversiver Schneckrührer (8) ist, gefestigt im Deckel (7), gestützt am unteren zylindrischen Teil des Trichters, ausgerüstet mit selbständigem Hydromotor zum Antrieb (9), das Metallendstück zum Entleeren der Mischung aus dem Dosierwerk ist ersetzbar, ausgerüstet mit Knöpfen zur Steuerung der Fütterung und ist verbunden durch ein Fütterrohr (11) mit der Öffnung zum Entleeren des Dosierwerks (6), und das hydraulische System, der Schneckrührer (8), das Dosierwerk (6), der Verteiler und die Knöpfe zum Steuern der Fütterung des ersetzbaren Metallendstücks (12) werden gleichzeitig von einem Kontroller mit Mikroprozessor durch Steuerplatte gesteuert.

## Revendications

1. Procédé de gavage de volailles aquatiques pour élevage d'oies ou de canards par lequel l'élevage des volailles a lieu dans un régime cyclique continu et les quantités nécessaires de nourriture et d'eau sont fixées une fois pour chaque lot de volailles à gaver selon les caractéristiques des volailles faisant partie de chaque cycle **caractérisé par** la modification répétée des quantités de pâtée nécessaires au gavage, les canards ou les oies de 60 jours ou plus étant soumis à un régime préliminaire d'alimentation, lorsque la ration journalière de nourriture est donnée en 1 - 2 h en cas de quantités de nourriture grandes disponibles, en assurant au moins 9 - 15 cm de superficie d'alimentation par volaille en cas d'utilisation d'auges rondes ou de 12 -20 cm en cas d'utilisation d'auges rectangulaires longues et, lorsque les volailles ont atteint l'âge de 75 jours, elles sont transférées dans des locaux où des cages à gavage sont montées à 50 cm du plancher par rangs le long des locaux, 3 - 4 oies ou 5 - 6 canards par cage, le programme de gavage étant déterminé en fonction de l'espèce et du sexe, ainsi que de l'âge et du poids des volailles dans le lot respectif, introduit dans le système automatique de gavage et contenant la composition de la pâtée de gavage et les doses, ensuite les volailles dans les cages étant soumises chaque jour au cours de 12 - 15 jours à un régime individuel spécial d'alimentation assuré par le système automatique, l'ouvrier prenant la tête de la volaille, ouvrant son bec d'une main et insérant l'embout métallique détachable du système automatique de gavage dans le gosier de la volaille de l'autre main, le cou de la volaille étant tendu tout le temps et la volaille étant debout sur le fond de la cage fixée au front de la cage par un dispositif spécial dans la partie avant de la cage, lorsque l'embout atteint le fond du jabot, son bouton de commande est pressé et la dose journalière respective programmée d'avance est refoulée dans le jabot.

2. Procédé de gavage de volailles aquatiques slon la revendication 1 ci-dessus caratérisé par le fait que les cages à gavage don't métalliques d'une largeur de 85 cm et d'une longueur de 85 cm.

3. Procédé de gavage de volailles aquatiques selon la revendication 1 ci-dessus **caractérisé par le fait que** dans le programme de gavage la pâtée de gavage contient des grains de mais de 33 à 42 % au poids, de la farine de mais dé 58 à 68% au poids, de l'amidon de 0 à 4%, 2% au poids d'un prémélange de vitamines et 64 % au poids d'eau par rapport à la substance sèche, en mzintenant un rapport constant de 26 % au poids de mais, 35 % au poids de farine de mais et 39 % d'eau par rapport à la masse sèche.

4. Procédé de gavage de volailles aquatiques selon la revendication 1 ci-dessus **caractérisé par le fait que** les doses journalières de gavage figurant dans le programme de gavage sont de l'ordre de 328 à 787 g de pâtée de gavage pour les canards et de 320 à 877 g de pâtée de gavage pour les oies.

5. Système automatique de gavage de volailles aquatiques selon la revendication 1 ci-dessus comportant un bâti avec châssis, moteur et transmission, trémie pour le stockage de la pâtée équipée d'un dispositif de refoulement de la pâtée dans un doseur contrôlé par un système hydraulique situé sous la trémie et comportant une chambre cylindrique avec un piston horizontal glissant, un distributeur-obturateur, un orifice d'alimentation et d'un orifice de refoulement de la pâtée par un embout métallique, la trémie 4 étant munie d'un couvercle de protection 7, tandis que le dispositif de refoulement de la pâtée représente un agitateur reversible bipartite 8 à vis sans fin monté sur roulements dans le couvercle 7 et un support dans la partie cylindrique inférieure de la trémie 4 équipé d'un moteur hydraulique 9, l'embout métallique 12 de refoulement de la pâtée du doseur 6 étant détachable, ayant des boutons de commande de l'alimentation et étant raccordé au moyen d'un tuyau 11 à l'orifice du doseur 6, le système hydraulique, l'agitateur à vis sans fin 8, le doseur 6, le ditributeur-obturateur et les boutons de commande de l'alimentation de l'embout métallique détachable 12 étant tous contrôlés simultanément par un micro-processeur au moyen d'un tableau de commande 13.
